# EUROPEAN PATENT SPECIFICATION

(11) **EP 3 579 694 B1**
(45) Date of publication and mention of the grant of the patent: **30.08.2023**
(21) Application number: 18760643.9
(22) Date of filing: 05.03.2018
(51) Int. Cl.: A01M 23/38, G08B 21/22, A01M 23/02, A01M 23/16

(54) **REMOTE MONITORING OF LIVE CATCH RODENT TRAPS**
FERNÜBERWACHUNG VON LEBENDNAGERFALLEN
SURVEILLANCE À DISTANCE DE PIÈGES POUR RONGEURS DESTINÉS À ÊTRE CAPTURÉS VIVANTS

(30) Priority: 02.03.2017 US 201762466124 P; 01.03.2018 US 201815909225
(43) Date of publication of application: 18.12.2019
(73) Proprietor: Woodstream Corporation, Lititz, PA 17543 (US)
(72) Inventor: DALY, Thomas J., Jr., Lititz, Pennsylvania 17543 (US); WANNINGER, Daniel J., Springfield, Pennsylvania 19064 (US); ZIELINSKI, Todd M., Philadelphia, Pennsylvania 19144 (US); JINNURI, Kalyan C., Lancaster, Pennsylvania 17602 (US); KOZIAR, Peter, Jr., Lititz, Pennsylvania 17543 (US)
(74) Representative: Prüfer & Partner mbB Patentanwälte · Rechtsanwälte
(86) International application number: PCT/US2018/020840
(87) International publication number: WO 2018/161065

(56) References cited:
- DE-T2-602004 012 409
- JP-A- 2016 178 636
- US-A1- 2005 097 808
- US-A1- 2005 235 553
- US-A1- 2005 235 553
- US-A1- 2006 150 470
- US-A1- 2006 265 941
- US-A1- 2011 109 460
- US-A1- 2014 085 100
- US-A1- 2014 279 600
- US-A1- 2015 296 766

## Description

### BACKGROUND OF THE INVENTION

### Field of the Invention

The present invention is related to the field of pest control and, more particularly, to a device and method for remotely monitoring rodent and insect activity in a live catch trap. The following documents form exemplary prior art in this field: DE 60 2004 012409 T2, US 2005/235553 A1, JP 2016 178636 A.

### Description of the Related Art

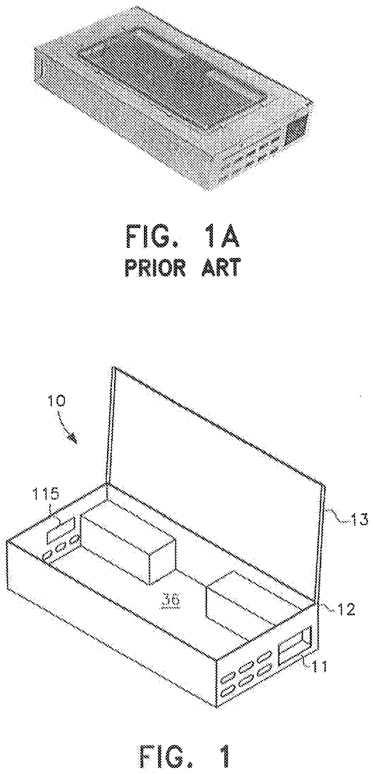

Live catch rodent traps such as the VICTOR^{®} TIN CATO shown in Figure 1A have been used for decades as a passive solution to the problem of rodent control in both consumer and commercial/industrial applications. These traps must be periodically checked for pest activity and cleanliness, thus a monitoring process is often required in order to meet professional rodent control standards imposed by commercial and/or industrial facilities, or by third parties such as food safety auditors.

In addition, live catch traps and similar devices are typically outfitted with glue boards. These glue boards are not only effective in catching rodents but also add additional value as they render the rodent traps effective as insect monitoring devices as well, since both rodents and insects entering the trap become glued to the boards. When servicing by a technician is necessary, it is easy to clear these traps of any rodents, insects or other debris that may have entered the trap by simply removing and discarding the old glue board and replacing it with a new board. Nonetheless, checking the status of the traps is time consuming and may involve unnecessary time expenditure in the case that the trap does not require servicing.

Accordingly, in order to avoid wasted time examining traps that have not undergone any activity, a need exists for a device and method for accurately sensing rodent activity or presence in a live catch trap. A need also exists for such a device and method that is also capable of determining if there has been insect activity and, in the case of the device having a glue board, whether the glue board surface is too dirty to continue to be effective.
DE 60 2004 012409 T2 shows an integrated method and system for preventing and solving problems relating to pests of any kind on a site, in a building, in a process, installation or in an area.

### SUMMARY OF THE INVENTION

In view of the foregoing, the present invention is directed to a live catch trap according to claim 1 having a microprocessor and a light-based sensor mounted therein. The light-based sensor is a light detecting sensor, specifically a photo sensor. The trap may be constructed with or without a glue board, although having the glue board is preferred as the value of the pest control provided by the trap is enhanced thereby. The trap further includes a wireless communication transmitter for sending wireless signals to a remote device.

The light detecting sensor in the live catch trap is a photo sensor that includes photodiode and LED arrays arranged on opposite sides of the trap so that an entering rodent is positioned between the arrays. The LEDs are pulsed at a predetermined frequency which, in the absence of rodent presence, stimulates the photodiodes. If a rodent is present, however, the light is blocked in a predictable manner that can be detected and recognized by the microprocessor as a rodent, such as by use of an internal processing algorithm.

With the sensing and/or monitoring and communication transmission capabilities, the live catch traps as described herein enable users to check and manage their deployed traps remotely without having to physically inspect the traps.

Accordingly, it is an object of the present invention to provide a remote monitoring capability for live catch traps that are equipped with one or more light detecting sensors for detecting rodent activity and a communication transmitter for wirelessly reporting trap status data to a remote user. Unless otherwise specified, the terms "visual sensor" and "light-based sensor" are used interchangeably herein to refer to both light detecting sensors and visual image sensors (outside the scope of the invention) and/or devices of the types and kinds disclosed herein and equivalents thereof in function and operation as such functional and operational equivalence would be understood by persons of skill in the art.

Another object of the present invention is to provide a device and method for monitoring rodent and/or insect activity in a live catch trap, and/or trap cleanliness, and for transmitting trap status information to a remote user, preferably via cloud computing, the live catch trap including a light-based sensor and a microprocessor configured to evaluate data from the light-based sensor.

Yet another object of the present invention is to provide a device and method for monitoring activity in a live catch trap in accordance with all but the immediately preceding object in which the light-based sensor is a light detecting sensor positioned inside or associated with the live catch trap, the light detecting sensor being a photo sensor including photodiode and LED arrays.

Still another object of the present invention is to provide a device and method for monitoring activity in a live catch trap in accordance with the preceding objects in which the live catch trap includes a microprocessor that evaluates the data received from the light-based sensor associated with the live catch trap and determines the type of activity that has been detected and/or monitored which is then transmitted with trap status data to the remote user.

A further object of the present invention is to provide a device and method for monitoring activity in a live catch trap in accordance with the preceding objects that enables a user to determine the trap content status and/or cleanliness of the trap on the basis of visual data feedback received from the trap before deciding whether or not it is necessary to send out a technician to service the trap.

A still further object of the present invention is to provide a device and method for monitoring activity in a live catch trap that is resistant to false triggers, such as due to insect or dirt infiltration, the trap being equipped with a light-based sensor for sensing rodent activity and a transmitter for wirelessly reporting trap status data to a remote user, the light-based sensor providing output data to a microprocessor that employs pattern recognition to evaluate the data and detect rodent presence.

Another object of the present invention is to provide a device and method for monitoring activity in a live catch trap in accordance with the preceding object in which the light-based sensor is a photo sensor that includes an array of light emitting diodes (LEDs) and a photodiode array on opposing sides of the trap, light transmitted by the LED array stimulating the photodiode array when the trap is empty while generating a predictable pattern in the photodiode array when the light is impeded by the presence of a rodent in the trap.

### BRIEF DESCRIPTION OF THE DRAWINGS

Figure 1A shows a VICTOR^{®} TIN CAT^{®} live catch trap known in the prior art.
Figure 1 is a perspective view of a live catch trap with the lid open to show a light-based sensor mounted on an inside surface of the trap body in accordance with the present invention.
Figure 2 is a block diagram of a live trap having a CMOS or CCD camera in accordance with a first embodiment outside the scope of the present invention.
Figure 3 is a block diagram of a live trap having a reflectivity sensor and showing the glue board as optional in accordance with a second embodiment outside the scope of the present invention.
Figure 4A is a side view of a trap with a reflectivity sensor that includes a light transmitter and receiver in accordance with the second embodiment shown in Figure 3.
Figure 4B is a side view of a trap like that shown in Figure 4A but as equipped with a glue board which forms the surface being evaluated by the reflectivity sensor.
Figure 5 is a block diagram of a live trap having a photo sensor that includes a photodiode array with an associated LED array for stimulating the photodiode array in accordance with a third embodiment that is within the scope of the present invention.
Figure 5A is a block diagram showing additional components found in the photo sensor shown in Figure 5.
Figure 5B is a block diagram showing the position of a rodent with respect to the LED and photodiode arrays of the photo sensor in the trap body of the live catch trap according to the third embodiment shown in Figure 5.
Figure 6 is a representative schematic of a photodiode amplifier and high pass filter like that included in the photo sensor shown in Figure 5A.
Figure 7 is a representative schematic of an LED array like that included in the photo sensor shown in Figure 5A.
Figure 8 is a flowchart of the method of monitoring a live catch trap and transmitting trap status information to a remote user.

### DETAILED DESCRIPTION OF THE PREFERRED EMBODIMENTS

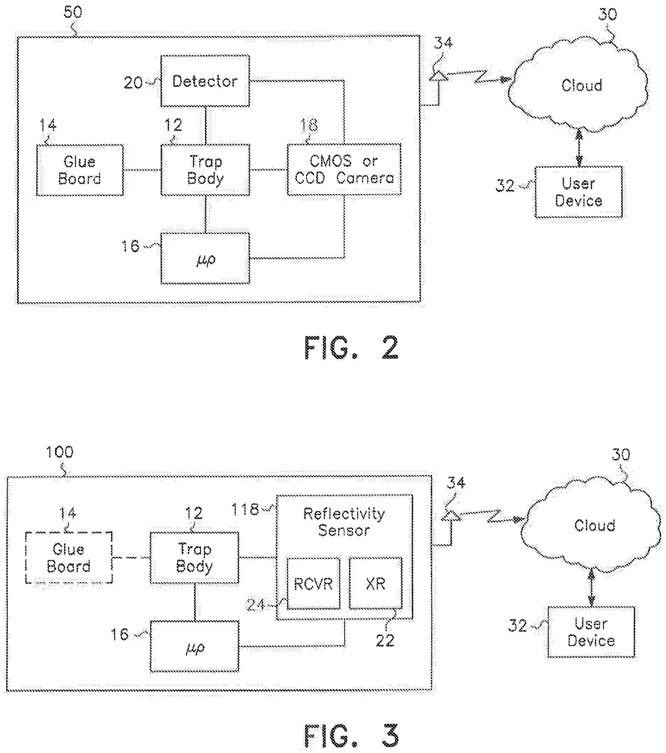

As shown in Figure 1, the present invention is directed to a live catch trap generally designated by reference numeral 10 having a trap body 12 with a lid 13 and at least one entrance 11 through which a rodent enters the trap body 12. A light-based sensor 115 is mounted on an inner surface of the trap above the floor 36 of the trap. The floor 36 of the trap 10 preferably includes a glue board 14 (see Figure 2).

According to a first embodiment shown in Figure 2 (outside the scope of the invention), the trap 50 includes a microprocessor 16 in communication with a visual image device such as a CMOS or CCD camera 18. The camera 18 evaluates the status of the trap interior, either periodically or in response to an event indicating rodent or insect activity as detected by a detector 20 and provides data to the microprocessor 16. The detector 20 may be a motion detector/accelerometer or a pressure and/or temperature sensor. The microprocessor 16 evaluates the data received from the camera 18 and determines the type of activity that has been detected which is then transmitted via a communication transmitter 34 to the smartphone, PC or like device of a remote user 32, preferably via the cloud 30. The user may thus be apprised of the trap condition and status without having to physically access the trap for hands-on evaluation.

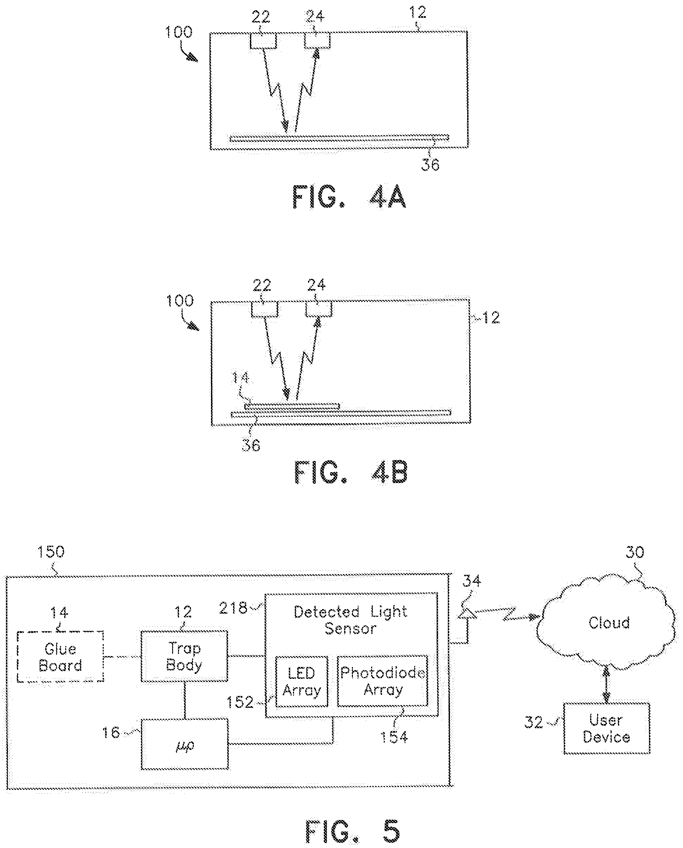

A second embodiment of a live catch trap 100, also outside the scope of the present invention is shown in Figure 3. As in the first embodiment, the trap 100 includes a trap body 12 that preferably includes a glue board 14 although, as in the first embodiment, inclusion of a glue board is not necessary. However, instead of a camera, the trap 100 includes a light detecting sensor embodied as a reflectivity sensor 118 comprised of a light transmitter 22 and a receiver 24 in communication with the microprocessor 16. The microprocesser 16 uses data from the reflectivity sensor 118 to evaluate the amount of light transmitted by the transmitter 22 that is reflected off an inner surface of the trap, such as the floor surface 36, and received by the receiver 24, as depicted in Figure 4A, to determine the presence and extent of foreign bodies including debris, insects and/or rodents on the floor 36 of the trap. While the reflectivity sensor 118 is shown as being mounted on the upper surface of the trap, the sensor could alternatively be mounted on a side surface of the trap with another side surface and/or the floor of the trap serving as the reflective surface(s) to be evaluated. The reflectivity sensor may be any sensor for detecting light including visual light, IR light, UV light, and the like, alone or in combination. Whatever wavelength of light is being detected, the associated light or reflectivity sensor may be operated periodically, such as at set or variable intervals, or continuously to monitor trap status. In addition, the light or reflectivity sensor may be used in conjunction with an activity sensor like detector 20. When combined with an activity sensor, the trap may be configured to activate the light or reflectivity sensor in response to an activity sensor or detector input indicating the presence of a rodent or the occurrence of other activity of potential interest within or adjacent the trap.

If a glue board 14 is included, it may be positioned on the floor 36 as shown in Figure 4B and serve as the surface being evaluated by the reflectivity sensor. As would be understood by persons of skill in the art, if a glue board is the surface being evaluated, the baseline used for the light that is reflected back would be different as compared to the light reflection baseline of the trap floor itself, i.e., the trap floor without a glue board. In either case, the condition of the trap in terms of cleanliness and/or pest presence is reported to the microprocessor 16 which evaluates the data and, using the communications transmitter 34, transmits the type of activity detected to the user 32, preferably via the cloud 30. The user may thus be apprised of the trap condition and status without having to physically access the trap for hands-on evaluation.

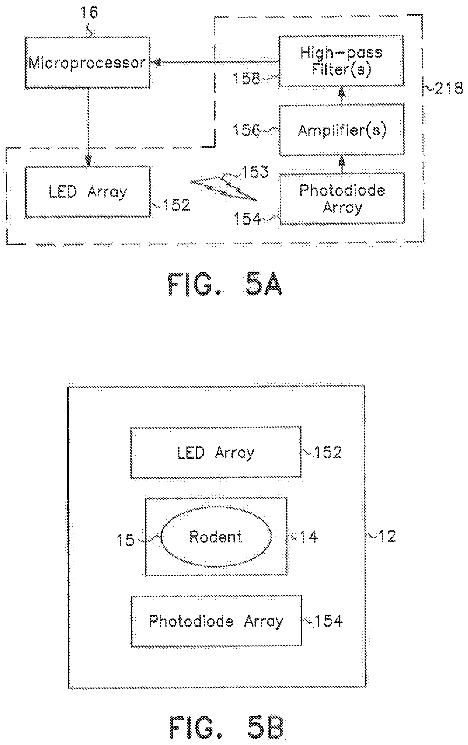

A third embodiment of a live catch trap 150, according to the invention, also uses a light detecting sensor and is shown in Figures 5, 5A and 5B. As in the first and second embodiments, the trap 150 includes a trap body 12 that preferably includes a glue board 14 although, as in the previous embodiments, inclusion of a glue board is not necessary.

The light detecting sensor used to monitor rodent activity or presence in the trap 150 is a photo sensor 218 that includes an LED array 152 and a photodiode array 154 in communication with the microprocessor 16. As shown in Figure 5A, the photo sensor 218 preferably includes at least one amplifier 156 and at least one high pass filter 158. If a glue board 14 is included, it may be advantageously positioned between the LED array 152 and the photodiode array 154 to substantially correspond with the likely position of a rodent 15 as shown in Figure 5B.

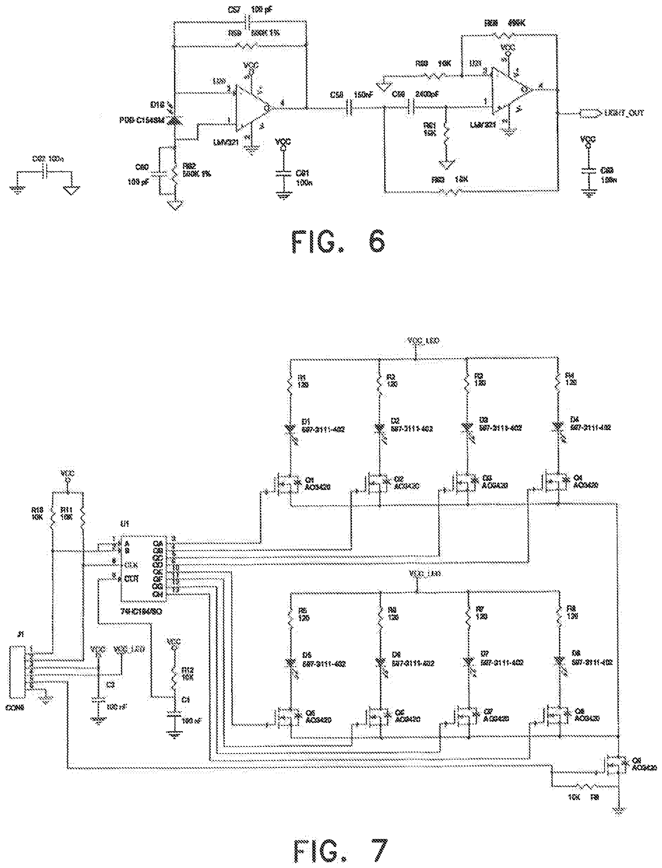

The light emitting diodes of the LED array 152 are configured to generate an output periodically and/or in response to an activity sensor. Preferably, the LEDs are pulsed with a waveform that has frequency components above 1 kilohertz, which is above frequencies commonly found in light sources such as LED or fluorescent fixtures. The light output 153 of the LED array stimulates the photodiode array 154 when no rodent 15 is present to block the light emitted by the LED array 152. Outputs from the photodiode array 154 are passed through the amplifier(s) 156 and conditioned via the high pass filter (s) 158 for ambient light elimination before being passed to the microprocessor 16. The high pass filter 158 preferably has a corner frequency of approximately 400 Hertz and a gain of 25x. A representative schematic of a photodiode amplifier and high pass filter circuit is shown in Figure 6. A representative schematic of an LED array is shown in Figure 7.

As rodents have a predictable profile, the microprocessor 16 is programmed with pattern recognition capability which is applied to the output of the high pass filter 158. When a rodent 15 is not present, the light from the LED array 152 stimulates the photodiode array 154 on the other side of the trap body 12 along most or all of its extent. Blockage of the light, as evaluated with pattern recognition software such as by using an internal processing algorithm or the like, however, is interpreted by the microprocessor 16 as indicating the presence of a rodent which may then be reported to the user 32, preferably via the cloud 30. Hence, as with the first two embodiments, the user may be apprised of trap condition and status without having to physically access the trap for hands-on evaluation.

To reduce the risk of false indications of rodent presence, the photodiode and LED arrays are preferably spaced vertically above the floor of the trap at a sufficient height to prevent the light beams from being interrupted by low-lying contamination such as insects or dust in the trap body. The number of LEDs and photodiodes in each array may be varied as would be understood by persons of skill in the art.

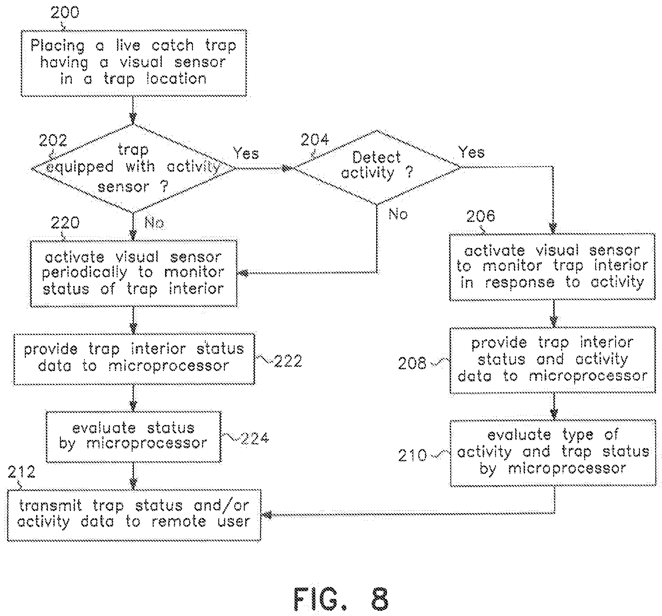

The present invention is further directed to a method of monitoring rodent and/or insect activity in live catch traps, and/or trap cleanliness, and for transmitting trap status information to a remote user via cloud computing as summarized in the flowchart of Figure 8. According to the method, a trap having a light-based or visual sensor, for example an inventive trap having a photo sensor as of the third embodiment, and transmission capabilities is placed in a trap location, step 200. If the trap is equipped with an activity sensor, step 202, upon detection of activity, step 204, the visual sensor is activated to monitor the trap interior, step 206. The trap activity and trap interior status data is provided to the microprocessor, step 208, which evaluates the type of activity, step 210. The trap status and activity data is then transmitted to a remote user, step 212.

If the trap does not have an activity sensor, step 202, or if the trap does have an activity sensor, step 202, but no activity is detected for a predetermined length of time, step 204, the visual sensor may be activated periodically, for example several times each hour, at least once a day, or at any determined interval, to monitor the status of the trap interior, step 220. The trap interior status data is provided to the microprocessor, step 222, which evaluates the status data, step 224. The status data is then transmitted to the remote user, step 212.

In the case of a visual image device such as a CMOS or CCD camera, evaluation of the status data, step 224, includes the microprocessor evaluating a picture taken by the camera to determine the type of trap activity shown in the picture, including whether a rodent is present, which may then be reported to the remote user.

In the case of a light reflectivity sensor, evaluation of the status data, step 224, includes the microprocessor evaluating the amount of light received by the receiver, after being transmitted by the light transmitter and reflected off an inner surface of the trap, to determine the presence of foreign bodies and/or a rodent in the trap for reporting to the remote user.

In the case of a photo sensor, according to the invention, evaluation of the status data, step 224, includes the microprocessor determining that a light pattern in the output received from the photodiode array indicates that at least part of the light emitted by the LED array was not received by the photodiode array. The microprocessor then uses pattern recognition to determine whether the light pattern of the photodiodes corresponds with a predicted pattern for a rodent.

With the live catch traps and method as described herein, unnecessary checking of traps that have not undergone any activity is avoided. When rodent activity has occurred, however, the trap both detects and evaluates the activity to provide the remote user with a report on the nature of the activity as well as the functional status of the trap in terms of its content which may include cleanliness. In addition, the ability to perform trap status checks at predetermined time intervals regardless of the presence or absence of activity, typically at least once a day but with variable time interval checking capability, and to transmit this information to a remote user, helps to ensure that the trap's functional readiness is efficiently maintained. The trap may also be configured to enable the remote user to request trap status information independently of trap activity.

## Claims

1. A live catch trap (10) for rodents comprising:
a trap body (12);
a photo sensor (218) including an LED array (152) and a photodiode array (154) arranged on opposing sides of the trap body (12), light emitted by the LED array (152) stimulating the photodiode array (154) when the trap body (12) is empty, said light being at least partly blocked by rodent presence in the trap body (12);
a microprocessor (16) receiving an output from the photodiode array (154) and being configured to use pattern recognition to evaluate light blockage patterns in said output for correspondence with rodent presence; and
a wireless communication transmitter configured to send a report from the trap (10) to a remote user when rodent presence has been determined by the microprocessor (16) using said pattern recognition.

2. The live catch trap (10) as set forth in claim 1, wherein the photo sensor (218) further includes an amplifier (156) and a high pass filter (158) for eliminating ambient light from the output provided to the microprocessor (16).

3. The live catch trap (10) as set forth in claim 1, wherein the trap body (12) includes a glue board (14).

4. A method for monitoring activity in a live catch trap (10),
the method comprising the steps of:
providing a live catch trap (10) having a trap body (12), a photo sensor (218) including an LED array (152) and a photodiode array (154) positioned on opposing sides of the trap body (12), a microprocessor (16) for receiving output data from the photodiode array (154), and a wireless communication transmitter configured to send processed trap status data to a remote user;
monitoring activity in the trap (10) using the LED array (152) and photodiode array (154), said photodiode array (154) receiving light emitted by said LED array (152) and providing an output to the microprocessor (16) ;
evaluating, by the microprocessor (16), the output from the photodiode array (154), said microprocessor (16) determining that a light pattern in the output indicates that at least part of the light emitted by said LED array (152) was not received by said photodiode array (154) and said microprocessor (16) using pattern recognition capability to determine whether the light pattern corresponds with a predicted pattern for a rodent; and
transmitting a report from the trap (10) to a remote user when rodent presence has been determined by the microprocessor (16) using said pattern recognition capability.

5. The method as set forth in claim 4, wherein the method includes passing the output from the photodiode array (154) through an amplifier (156) and a high pass filter (158) to eliminate ambient light before being sent to the microprocessor (16).

## Patentansprüche

1. Lebendfalle (10) für Nagetiere, umfassend:
einen Fallenkörper (12);
einen Fotosensor (218), der eine LED-Anordnung (152) und eine Fotodiodenanordnung (154) umfasst, die auf gegenüberliegenden Seiten des Fallenkörpers (12) angeordnet sind, wobei das von der LED-Anordnung (152) emittierte Licht die Fotodiodenanordnung (154) stimuliert, wenn der Fallenkörper (12) leer ist, wobei das Licht zumindest teilweise durch die Anwesenheit von Nagetieren im Fallenkörper (12) blockiert wird;
einen Mikroprozessor (16), der eine Ausgabe von der Fotodiodenanordnung (154) empfängt und ausgebildet ist, eine Mustererkennung zu verwenden, um Lichtblockierungsmuster in der Ausgabe auf Übereinstimmung mit der Anwesenheit von Nagetieren auszuwerten; und
einen Sender zur drahtlosen Kommunikation, der ausgebildet ist, eine Meldung von der Falle (10) an einen entfernten Benutzer zu senden, wenn die Anwesenheit von Nagetieren durch den Mikroprozessor (16) unter Verwendung der Mustererkennung festgestellt worden ist.

2. Lebendfalle (10) nach Anspruch 1, wobei der Fotosensor (218) weiter einen Verstärker (156) und einen Hochpassfilter (158) zum Entfernen von Umgebungslicht aus der dem Mikroprozessor (16) bereitgestellten Ausgabe aufweist.

3. Lebendfalle (10) nach Anspruch 1, wobei der Fallenkörper (12) eine Klebetafel (14) aufweist.

4. Verfahren zur Überwachung der Aktivität in einer Lebendfalle (10),
wobei das Verfahren die folgenden Schritte umfasst:
Bereitstellen einer Lebendfalle (10) mit einem Fallenkörper (12), einem Fotosensor (218), der eine LED-Anordnung (152) und eine Fotodiodenanordnung (154) aufweist, die auf gegenüberliegenden Seiten des Fallenkörpers (12) angeordnet sind, einem Mikroprozessor (16) zum Empfangen von Ausgabedaten von der Fotodiodenanordnung (154) und einem Sender zur drahtlosen Kommunikation, der ausgebildet ist, verarbeitete Fallenstatusdaten an einen entfernten Benutzer zu senden;
Überwachen der Aktivität in der Falle (10) unter Verwendung der LED-Anordnung (152) und der Fotodiodenanordnung (154), wobei die Fotodiodenanordnung (154) von der LED-Anordnung (152) emittiertes Licht empfängt und eine Ausgabe für den Mikroprozessor (16) bereitstellt;
Auswerten der Ausgabe von der Fotodiodenanordnung (154) durch den Mikroprozessor (16), wobei der Mikroprozessor (16) feststellt, dass ein Lichtmuster in der Ausgabe angibt, dass zumindest ein Teil des von der LED-Anordnung (152) emittierten Lichts nicht von der Fotodiodenanordnung (154) empfangen wurde, und der Mikroprozessor (16) die Fähigkeit zur Mustererkennung verwendet, um festzustellen, ob das Lichtmuster einem prognostizierten Muster für ein Nagetier entspricht; und
Übermitteln einer Meldung von der Falle (10) an einen entfernten Benutzer, wenn die Anwesenheit eines Nagetiers durch den Mikroprozessor (16) unter Verwendung der Fähigkeit zur Mustererkennung festgestellt worden ist.

5. Verfahren nach Anspruch 4, wobei das Verfahren das Durchleiten der Ausgabe von der Fotodiodenanordnung (154) durch einen Verstärker (156) und einen Hochpassfilter (158) umfasst, um Umgebungslicht zu entfernen, bevor sie an den Mikroprozessor (16) gesendet wird.

## Revendications

1. Un piège à capture vivante (10) pour rongeurs comprenant :
un corps de piège (12) ;
un photodétecteur (218) comprenant un réseau de DEL (152) et un réseau de photodiodes (154) disposés sur des côtés opposés du corps de piège (12), la lumière émise par le réseau de DEL (152) stimulant le réseau de photodiodes (154) lorsque le corps de piège (12) est vide, ladite lumière étant au moins partiellement bloquée par la présence d'un rongeur dans le corps de piège (12) ;
un microprocesseur (16) recevant une sortie du réseau de photodiodes (154) et étant configuré pour utiliser une reconnaissance de motifs pour évaluer des motifs de blocage de lumière dans ladite sortie pour une correspondance avec la présence d'un rongeur ; et
un émetteur de communication sans fil configuré pour envoyer un rapport depuis le piège (10) à un utilisateur distant lorsque la présence d'un rongeur a été déterminée par le microprocesseur (16) en utilisant ladite reconnaissance de motifs.

2. Le piège à capture vivante (10) selon la revendication 1, dans lequel le photodétecteur (218) comprend en outre un amplificateur (156) et un filtre passe-haut (158) pour éliminer la lumière ambiante de la sortie fournie au microprocesseur (16).

3. Le piège à capture vivante (10) selon la revendication 1, dans lequel le corps de piège (12) comprend un panneau de colle (14).

4. Un procédé de surveillance de l'activité dans un piège à capture vivante (10), le procédé comprenant les étapes consistant à :
fournir un piège à capture vivante (10) ayant un corps de piège (12), un photodétecteur (218) comprenant un réseau de DEL (152) et un réseau de photodiodes (154) positionnés sur des côtés opposés du corps de piège (12), un microprocesseur (16) pour recevoir des données de sortie du réseau de photodiodes (154), et un émetteur de communication sans fil configuré pour envoyer des données d'état de piège traitées à un utilisateur distant ;
surveiller l'activité dans le piège (10) en utilisant le réseau de DEL (152) et le réseau de photodiodes (154), ledit réseau de photodiodes (154) recevant la lumière émise par ledit réseau de DEL (152) et fournissant une sortie au microprocesseur (16)
évaluer, par le microprocesseur (16), la sortie du réseau de photodiodes (154), ledit microprocesseur (16) déterminant qu'un motif lumineux dans la sortie indique qu'au moins une partie de la lumière émise par ledit réseau de DEL (152) n'a pas été reçue par ledit réseau de photodiodes (154) et ledit microprocesseur (16) utilisant une capacité de reconnaissance de motifs pour déterminer si le motif lumineux correspond à un motif prédit pour un rongeur ; et
transmettre un rapport depuis le piège (10) à un utilisateur distant lorsque la présence d'un rongeur a été déterminée par le microprocesseur (16) en utilisant ladite capacité de reconnaissance de motifs.

5. Le procédé selon la revendication 4, dans lequel le procédé comprend le passage de la sortie du réseau de photodiodes (154) à travers un amplificateur (156) et un filtre passe-haut (158) pour éliminer la lumière ambiante avant d'être envoyée au microprocesseur (16).
